# EUROPEAN PATENT APPLICATION

(11) **EP 3 385 556 A1**
(43) Date of publication of application: **10.10.2018**
(21) Application number: 15909801.1
(22) Date of filing: 03.12.2015
(51) Int. Cl.: F16D 1/02

(54) **SHAFT COUPLING**

(71) Applicant: Harmonic Drive Systems Inc., Shinagawa-ku Tokyo 140-0013 (JP); Nabeya Bi-Tech Kabushiki Kaisha, Seki-shi, Gifu 501-3939 (JP)
(72) Inventor: SHIROKOSHI, Norio, Azumino-shi Nagano 399-8305 (JP); YAMADA, Kei, Seki-shi Gifu 501-3939 (JP)
(74) Representative: TBK
(86) International application number: PCT/JP2015/084056
(87) International publication number: WO 2017/094171

(57) **Abstract**

A slotted-type rigid coupling (1) is manufactured so that the internal-diameter dimension of a first shaft hole (5) of a circumferentially divided shaft-fastening part (16) is the same as that of a shaft (6). The first shaft hole (5) is widened by widening force from a pressing mechanism (4) provided with a fastening bolt (3), and the shaft (6) is inserted through the first shaft hole (5) up to a shaft insertion hole (18). The widening force is ceased, the first shaft hole (5) is narrowed by fastening force from the pressing mechanism (4), and the shaft (6) is securely fastened. When the shaft (6) is securely fastened to the shaft-fastening part (16) by the fastening bolt (3), eccentricity in the shaft (6) is prevented or minimized.

## Description

### TECHNICAL FIELD

The present invention relates to a slotted-type shaft coupling used in cases such as when two shafts are coaxially linked. More specifically, the present invention relates to a shaft coupling with which eccentricity can be minimized and a shaft to be linked can be securely fastened by a fastening bolt, etc., to a slotted shaft-fastening part of the shaft coupling.

### BACKGROUND ART

In a slotted-type shaft coupling, one shaft to be linked is inserted into a cylindrical shaft-fastening part that has a slot (a slit), in which state, the shaft-fastening part is fastened by a fastening bolt and the shaft is coaxially and securely fastened to the shaft-fastening part.

Patent Document 1 proposes a structure capable of preventing or minimizing tilting of a shaft fastened in a rigid-type shaft coupling. In a shaft hole where the shaft to be fastened is inserted in the rigid-type shaft coupling disclosed in this patent document, the internal-diameter dimension of an axially adjacent shaft hole portion is made to be slightly larger than that of the shaft hole portion of the shaft-fastening part. Due to this design, when the shaft-fastening part is fastened by a fastening bolt, disparity in the surface pressure with which the inner peripheral surface of the shaft hole comes into contact with the shaft is lessened, tilting of the shaft can be minimized, and the shaft can be securely fastened to the shaft-fastening part.

Other known examples of slotted-type shaft couplings include flexible-type shaft couplings such as those disclosed in Patent Document 2 and Patent Document 3. The flexible-type shaft coupling disclosed in Patent Document 2 has a structure in which a slotted first linking member to which one shaft to be linked is securely fastened and a slotted second linking member to which another shaft to be linked is securely fastened are coaxially linked by an elastic body. The flexible-type shaft coupling disclosed in Patent Document 3 has a structure in which a slotted first linking member to which one shaft to be linked is securely fastened and a slotted second linking member to which another shaft to be linked is securely fastened are coaxially linked via a third metal body.

### PRIOR ART LITERATURE

### PATENT DOCUMENTS

Patent Document 1: WO 2014/027383
Patent Document 2: JP 2008-241029 A
Patent Document 3: JP 2001-295851 A

### SUMMARY OF THE INVENTION

### PROBLEMS TO BE SOLVED BY THE INVENTION

Commonly, in a shaft coupling, a shaft hole formed in a cylindrical shaft-fastening part having slot is made to have an internal-diameter dimension slightly larger than the outside-diameter dimension of a shaft to be linked so that the shaft can be inserted into the shaft hole. Therefore, when the shaft has been inserted into the shaft hole, a gap is created between the inner peripheral surface of the shaft hole and the outer peripheral surface of the shaft. When the shaft-fastening part is fastened by a fastening bolt, the shaft is shifted to one side in relation to the shaft hole, and there is a risk that the shaft will be secured to the shaft-fastening part in an eccentric state.

In view of such matters, it is an object of the present invention to provide a shaft coupling with which a shaft to be linked can be linked with minimal error of eccentricity.

Another object of the present invention is to provide a shaft coupling with which a shaft to be linked can be linked with minimal error of eccentricity and declination.

### MEANS OF SOLVING THE PROBLEMS

In order to solve the problems described above, the shaft coupling of the present invention is characterized by having:
a tubular coupling main body;
a first slit that, in a position at a predetermined distance in an axial direction from one first end face of the coupling main body, divides the coupling main body over a predetermined angular range in the axial direction;
a shaft-fastening part defined by a portion of the coupling main body from the first end face to the first slit;
a second slit that circumferentially divides the shaft-fastening part;
a fastening shaft hole that is defined by an inner peripheral surface of the shaft-fastening part and that opens in the first end face; and
a pressing mechanism capable of generating widening force and fastening force to deform the shaft-fastening part in directions whereby first and second circumferential end faces of the shaft-fastening part, which oppose each other across the second slit, are caused to move away from and toward each other;
wherein the fastening shaft hole has an internal-diameter dimension such that an interference fit or a transition fit can be formed with the shaft to be fastened when the shaft-fastening part is in a pre-deformed state; and
the fastening shaft hole has an internal-diameter dimension such that a gap is formed with the shaft in a widened state in which the pressing mechanism exerts the widening force having a predetermined value.

The shaft coupling of the present invention is manufactured so that the fastening shaft hole has the same dimension as the shaft to be linked (the pre-deformed state) . When the shaft to be linked is inserted into the fastening shaft hole, widening force is exerted from the pressing mechanism on the shaft-fastening part and the shaft-fastening part is widened (the widened state) so that the shaft can be inserted into the fastening shaft hole. After the shaft has been inserted into the widened fastening shaft hole, the widening force caused by the pressing mechanism is ceased.

When the widening force by the pressing mechanism is ceased, the shaft hole acts as though to return to its original size due to the elastic return force of the shaft-fastening part. The shaft thereby comes to be fitted in the fastening shaft hole with substantially no gap between the shaft and the fastening shaft hole. From this state, when fastening force is exerted on the shaft-fastening part by the pressing mechanism and the shaft-fastening part is narrowed, a securely fastened state is formed, in which the shaft is securely fastened to the shaft-fastening part with no shaft eccentricity caused by a gap between the fastening shaft hole and the shaft.

In practice, the shaft coupling is manufactured with fit tolerance with the shaft being a "transition fit," whereby a "gap" or "interference" is created with the shaft when the widening force is ceased, but the dimensional difference between the shaft and the hole can be reduced. It is thereby possible to minimize error of shaft eccentricity caused by the gap between the shaft and the hole.

In the present invention, when an end part on the side of the shaft-fastening part where the first circumferential end face is present is designated as a first circumferential end part and another end part on the side of the shaft-fastening part where the second circumferential end face is present is designated as a second circumferential end part, the pressing mechanism is provided with, e.g.:
a bolt insertion hole formed in the first circumferential end part;
a bolt screw hole formed in the second circumferential end part; and
a fastening bolt which is disposed so that it is screwed into the bolt screw hole through the bolt insertion hole and which is engaged in the first circumferential end part so as to not move toward or away from the second circumferential end part.

In this case, in the pre-deformed state, the fastening bolt is in a first position in which it is screwed into the bolt screw hole by a predetermined amount. In the widened state, the fastening bolt is in a second position in which it is turned by a predetermined amount from the first position in a direction of being pulled out from the bolt screw hole. Because the fastening bolt engages in the first circumferential end part, when the fastening bolt is turned in a direction of being pulled out from the second circumferential end part, the first circumferential end part is pushed in a direction away from the second circumferential end part in the amount by which the fastening bolt is pulled out from the second circumferential end part. As a result, the second slit is widened, and the fastening shaft hole is expanded to be slightly larger than the shaft.

When the fastening bolt is turned in the direction of being screwed in toward the second circumferential end part to reach a third position where the fastening bolt is screwed further into the second circumferential end part than the first position, the first circumferential end part is pushed in a direction of drawing close to the second circumferential end part in the amount by which the fastening bolt is screwed into the second circumferential end part. Consequently, the second slit is enclosed and the fastening shaft hole is narrowed, creating a state in which the fastening shaft hole can securely fasten the inserted shaft with sufficient fastening force.

In this aspect, the following configuration can be employed in order to cause the fastening bolt to engage in the first circumferential end part so as to not move in a direction of drawing close to or a direction of drawing away from the second circumferential end part. Specifically, the pressing mechanism is provided with a bolt-engaging pin secured to the first circumferential end part, the fastening bolt is provided with a bolt head part that is engaged with the first circumferential end part from the opposite side from the second circumferential end part, and the bolt-engaging pin is engaged with the bolt head part from the opposite side from the second circumferential end part.

With this configuration, a pressing mechanism capable of pressing the shaft-fastening part in a widening direction and a narrowing direction through the use of a fastening bolt can be achieved, merely by attaching the bolt-engaging pin.

Next, in the shaft coupling of the present invention, in addition to the configuration described above, it is preferable that:
an adjacent tubular portion adjacent to the shaft-fastening part in the coupling main body is provided with a shaft insertion hole coaxially joined to the fastening shaft hole; and
the shaft insertion hole is a hole into which a tip portion of the shaft inserted in the fastening shaft hole is inserted, the shaft insertion hole having an internal-diameter dimension larger than the outside-diameter dimension of the shaft.

When the shaft-fastening part has been deformed in the narrowing direction by the fastening bolt, the inner peripheral surface portion of the shaft insertion hole of the adjacent tubular portion joined to the shaft-fastening part radially pushes on the outer peripheral surface of the shaft, and there is a risk of the shaft tilting. In the present invention, because the shaft insertion hole, into which the tip portion of the shaft to be linked is inserted, is made to be slightly larger than the shaft, fastening of the shaft in a tilted state can be prevented or minimized. Consequently, the shaft can be securely fastened to the shaft-fastening part in a state free of eccentricity and declination.

Next, when two shafts are coaxially linked using the shaft coupling, in the shaft coupling of the present invention, in addition to the configuration described above:
the coupling main body is provided with a shaft-linking tubular portion having a predetermined length along the axial direction from a second end face on the opposite side from the first end face; and
a second shaft hole that opens in the second end face is defined by a circular inner peripheral surface of the shaft-linking tubular portion.

In the shaft coupling having this configuration, one shaft is linked in the second shaft hole so as to be coaxial, through press-fitting or another method. Another shaft can be securely fastened with precision in the opposite-side shaft-fastening part, with minimal off-centering and tilting as described above.

### BRIEF DESCRIPTION OF THE DRAWINGS

FIG. 1 is a perspective view showing a state in which two shafts are linked to a rigid-type shaft coupling to which the present invention is applied;
FIG. 2 is a perspective view showing the shaft coupling of FIG. 1 in a state of being sectioned through a plane including the axis line of the shaft coupling;
FIG. 3 is an enlarged partial cross-sectional view showing the inner peripheral surface of a hole in the shaft coupling of FIG. 2; and
FIG. 4 includes a partial perspective view showing a pressing mechanism of a shaft-fastening part of the shaft coupling of FIG. 1, and a transverse cross-sectional view showing the shaft-fastening part thereof.

### MODE FOR CARRYING OUT THE INVENTION

An embodiment of a shaft coupling to which the present invention is applied is described below with reference to the drawings.

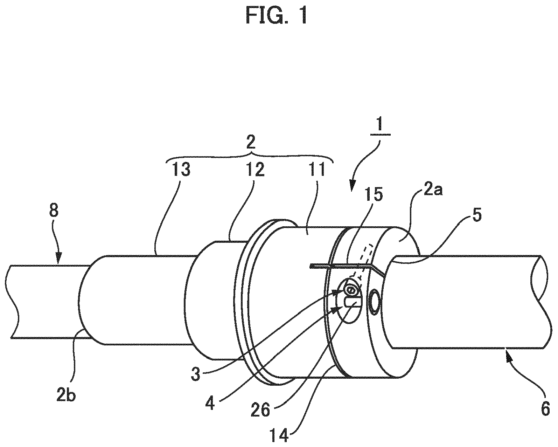

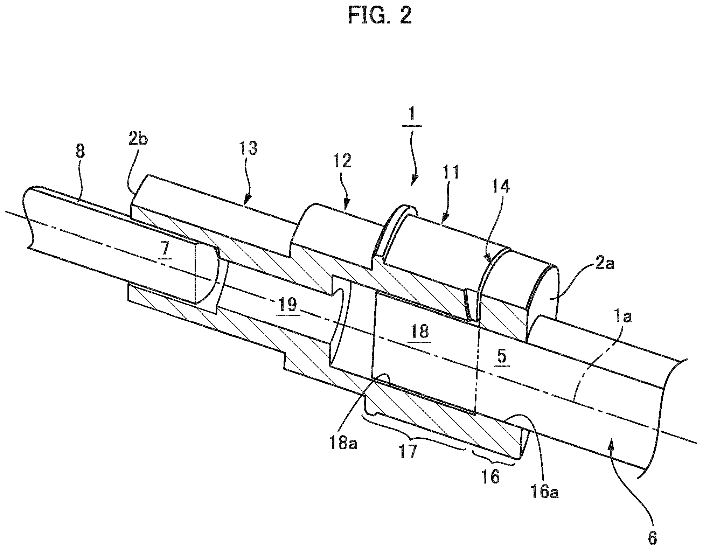

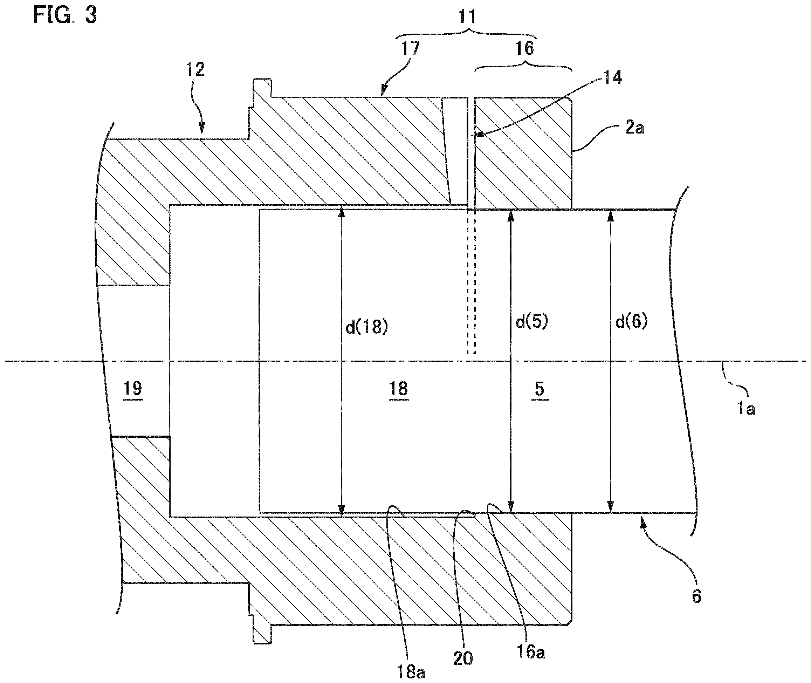

FIG. 1 is a perspective view showing a rigid-type shaft coupling (referred to below as a "rigid coupling") to which the present invention is applied, FIG. 2 is a perspective view of the shaft coupling sectioned through a plane including the axis line of the shaft coupling, and FIG. 3 is an enlarged partial cross-sectional view showing the inner peripheral surface of a hole in the rigid coupling.

To give a description with reference to these drawings, the rigid coupling 1 has a cylindrical coupling main body 2 and a pressing mechanism 4 provided with a fastening bolt 3. One shaft 6 to be linked is inserted into a first shaft hole 5 (fastening shaft hole) that opens in an end face 2a of the coupling main body 2 on one side along the direction of an axis line 1a, and the shaft 6 is securely fastened in a coaxial state to the coupling main body 2 by the fastening bolt 3. Another shaft 8 to be linked is, for example, press-fitted and secured in a coaxial state in a second shaft hole 7 opened in the other end face 2b of the coupling body 2 on the other side along the direction of the axis line 1a. This forms a state in which both shafts 6, 8 are coaxially linked via the rigid coupling 1.

In the coupling main body 2, a large-diameter cylindrical part 11, a cylindrical part 12 smaller in diameter thereto, and a cylindrical part 13 even smaller in diameter thereto are coaxially formed from the one end face 2a toward the other end face 2b. In the large-diameter cylindrical part 11, a first slit 14 that has constant width and that extends in a circumferential direction over an angular range of about 180 degrees is formed in a position at a predetermined distance from the one end face 2a along the direction of the axis line 1a. The portion of the cylindrical part 11 where the first slit 14 is formed is divided along the direction of the axis line 1a by the first slit 14.

Also formed in the cylindrical part 11 is a second slit 15 that has constant width and that extends from the end face 2a in the direction of the axis line 1a. The second slit 15 leads into the first slit 14 and extends to a position past the first slit 14. A portion in the cylindrical part 11 from the end face 2a to the first slit 14 is circumferentially divided by the second slit 15. The portion where the second slit 15 is formed functions as a shaft-fastening part 16 for securely fastening the shaft 6 with the use of the fastening bolt 3.

The first shaft hole 5 that opens in the end face 2a of the coupling main body 2 is a hole portion defined by a circular inner peripheral surface 16a of the shaft-fastening part 16 in the cylindrical part 11, as shown in FIGS. 2 and 3. An adjacent cylindrical portion 17 is formed adjacent to the shaft-fastening part 16 in the cylindrical part 11, and a circular shaft insertion hole 18 is formed up to a position partway along the cylindrical part 12. The shaft insertion hole 18 leads coaxially into the first shaft hole 5. The one shaft 6 to be linked is inserted through the first shaft hole 5 from the side having the end face 2a, up to a position partway along the shaft insertion hole 18.

Conversely, the second shaft hole 7 that opens in the other end face 2b is a circular shaft hole smaller in diameter than the first shaft hole 5, and the second shaft hole 7 extends up to a position in the cylindrical part 13 partway along the direction of the axis line 1a. The second shaft hole 7 and the shaft insertion hole 18 are formed coaxially and are joined to each other via a circular communication hole 19 that is smaller in diameter than both the other holes.

In this embodiment, the first shaft hole 5 into which the shaft 6 is inserted is manufactured so that the internal-diameter dimension d(5) of the first shaft hole 5 is the same dimension as the outside-diameter dimension d(6) of the shaft 6, as shown in FIG. 3. In other words, the first shaft hole 5 is machined so that the fit tolerance thereof relative to the shaft 6 is a transition fit. Conversely, the internal-diameter dimension d(18) of the shaft insertion hole 18 is set to a size such that a gap will assuredly be formed between the shaft insertion hole 18 and the shaft 6. In other words, the shaft insertion hole 18 is machined so that the fit tolerance of the shaft insertion hole relative to the shaft 6 is plus. Therefore, an arcuate step-difference face 20 is created between the circular inner peripheral surface 16a of the shaft-fastening part 16 and a circular inner peripheral surface 18a (continuous with the circular inner peripheral surface 16a) of the shaft insertion hole 18.

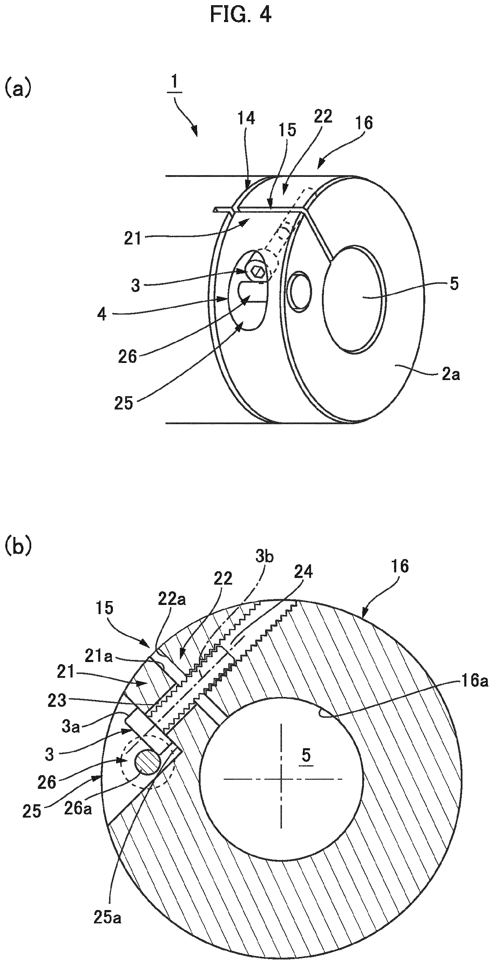

Next, FIG. 4(a) is a partial perspective view showing the pressing mechanism 4 of the shaft-fastening part 16 of the rigid coupling 1, and FIG. 4(b) is a transverse cross-sectional view of the same.

The pressing mechanism 4 deforms the shaft-fastening part 16, which is circumferentially divided by the second slit 15, in a widening direction and a narrowing direction. The shaft-fastening part 16 is divided by the second slit 15, and a first circumferential end face 21a and a second circumferential end face 22a oppose each other across the second slit 15. The pressing mechanism 4, with the use of the hexagonal holed fastening bolt 3, is capable of deforming the shaft-fastening part 16 in directions in which the first and second circumferential end faces 21a, 22a draw apart and draw closer together.

Designating the end part on the side of the shaft-fastening part 16 that has the first circumferential end face 21a as a first circumferential end part 21 and the end part on the side that has the second circumferential end face 22a as a second circumferential end part 22, the pressing mechanism 4 is provided with a bolt insertion hole 23 formed in the first circumferential end part 21 and a bolt screw hole 24 formed in the second circumferential end part 22. A recess 25 exposed in the outer peripheral surface is formed in the first circumferential end part 21, and the bolt insertion hole 23 is opened in an end face 25a of the recess 25. The bolt insertion hole 23 and the bolt screw hole 24 are formed coaxial to a direction orthogonal to the second slit 15 (a direction orthogonal to the radial direction of the shaft-fastening part 16). The fastening bolt 3 is disposed in a state of having been screwed into the bolt screw hole 24 through the bolt insertion hole 23.

In this embodiment, the fastening bolt 3 is engaged with the first circumferential end part 21 so as to not move in the direction of drawing nearer to or the direction of drawing away from the second circumferential end part 22. Specifically, a bolt head part 3a of the fastening bolt 3 is in contact with the end face 25a of the recess 25 in which the bolt insertion hole 23 opens. Additionally, the pressing mechanism 4 is provided with a bolt-engaging pin 26 secured to the first circumferential end part 21. The bolt-engaging pin 26 is pushed in from the end face 2a of the coupling body 2 in a direction along the axis line 1a, and a pin leg part 26a of the bolt-engaging pin 26 protrudes into the recess 25. The pin leg part 26a is engaged with the bolt head part 3a from the opposite side from the second circumferential end part 22. Specifically, the pin leg part 26a is engaged with the bolt head part 3a at a position offset from the center of the bolt head part 3a, so as to not interfere with a bolt-fastening tool inserted into the hexagonal hole for the bolt head part 3a.

The procedure of coaxially linking the shaft 6 in the first shaft hole 5 for fastening of the rigid coupling 1 shall now be described. In the initial state, the fastening bolt 3 is in a first position of being screwed a predetermined amount into the bolt screw hole 24. In this state, the shaft-fastening part 16 has its original shape, and the internal-diameter dimension d(5) of the first shaft hole 5 is a dimension that allows a transition fit with the outside-diameter dimension d(6) of the shaft 6.

In this state (the pre-deformed state), the fastening bolt 3 is turned by a predetermined amount in the direction in which the fastening bolt 3 is pulled out of the bolt screw hole 24. The bolt head part 3a of the fastening bolt 3 is held in the direction of a bolt axis line 3b between the end face 25a of the recess 25 of the first circumferential end part 21 and the bolt-engaging pin 26 secured to the first circumferential end part 21. The fastening bolt 3 is turned by a predetermined amount in the pulling out direction and moved to a second position. The first circumferential end part 21 is thereby pushed in a direction away from the second circumferential end part 22 by the fastening bolt 3, which has been moved in a direction of being pulled out from the side having the second circumferential end part 22. As a result, the slit width of the second slit 15 widens and the first shaft hole 5 is widened to become larger than the shaft 6 (a widened state) . The shaft 6 can thereby be inserted into the first shaft hole 5. The shaft 6 is inserted from the first shaft hole 5 up to a position partway through the shaft insertion hole 18.

Thereafter, the fastening bolt 3 is turned in a direction of being screwed into the bolt screw hole 24 and moved to a third position toward the second circumferential end part 22 from the initial first position. The first circumferential end part 21 is pushed in a direction of drawing close to the second circumferential end part 22 in the amount by which the fastening bolt 3 is screwed into the second circumferential end part 22. Consequently, the second slit 15 is enclosed, the first shaft hole 5 is narrowed, and a securely fastened state is formed in which the shaft 6 inserted into the first shaft hole 5 is securely fastened.

Thus, the first shaft hole 5 is set so that the fit tolerance with the shaft 6 is a transition fit, the first shaft hole 5 is forcefully widened, the shaft 6 is inserted, and the first shaft hole 5 is thereafter narrowed further to its original state. Consequently, unlike a case in which a shaft is inserted into a shaft hole so as to have a clearance fit and the shaft hole is constricted, a gap is not formed between the shaft hole and the shaft during fastening, and the shaft can therefore be securely fastened without misalignment.

The internal-diameter dimension d(18) of the shaft insertion hole 18 on the side further within than the first shaft hole 5 is slightly larger than the shaft 6. Therefore, when the shaft-fastening part 16 is fastened, the shaft 6 is not pressed in the radial direction by the inner peripheral surface portion of the shaft insertion hole 18 joining to the shaft-fastening part 16, and no tilt is caused. Consequently, the shaft can be securely fastened without being tilted.

### (Other embodiments)

The above embodiment is a case in which the present invention is applied to a rigid coupling. The present invention can be similarly applied to a flexible-type shaft coupling as well. For example, the present invention can be applied to the shaft coupling illustrated in FIGS. 8 and 9 of Patent Document 2 (JP-A 2008-241029), and to the shaft coupling illustrated in FIG. 3 of Patent Document 3 (JP-A 2001-295851).

For example, such a shaft coupling is provided with a slotted tubular first linking member having a shaft hole in which one shaft to be linked is securely fastened, a slotted second linking member having a shaft hole in which another shaft to be linked is securely fastened, and an elastic body or a third metal body that coaxially links and integrates the first and second linking members. The elastic body is a molded article formed from, e.g., hydrogenated nitrile rubber vulcanized with peroxide, hydrogenated nitrile rubber vulcanized with sulfide, butyl rubber, nitrile rubber, propylene rubber, fluororubber, etc., and the first and second linking members are integrated through the elastic member by, e.g., insert molding. The third metal body is machined using, e.g.: A2017, A7075, or another form of aluminum; SUS303, SUS304, or another form of stainless steel; S45C or another form of iron; etc., and the first and second linking members are integrated via the third metal body by, e.g., fastening with screws.

In this case, for example, a tubular coupling main body in the previously described embodiment is configured from a first linking member to which one shaft is securely fastened, a second linking member to which another shaft is securely fastened, and an elastic member or third metal body that links the first and second linking members. For example, the first linking member preferably has the following configuration.

Specifically, the first linking member has, in positions at predetermined distances along an axial direction from one first end face of the first linking member: a first slit that divides the first linking member over a predetermined angular range along the axial direction; a shaft-fastening part defined by the portion of the first linking member from the first end face to the first slit; a second slit that circumferentially divides the shaft-fastening part; a fastening shaft hole that is defined by the inner peripheral surface of the shaft-fastening part and that opens in the first end face; and a pressing mechanism capable of generating widening force and fastening force that deforms the shaft-fastening part in directions whereby first and second circumferential end faces of the shaft-fastening part, which oppose each other across the second slit, are caused to draw away from and toward each other. With the shaft-fastening part in a pre-deformed state, the fastening shaft hole has an internal-diameter dimension such that an interference fit or a transition fit can be formed with the shaft to be fastened, and in a widened state in which the pressing mechanism exerts a predetermined widening force, the fastening shaft hole has an internal-diameter dimension such that a gap is formed with the shaft.

## Claims

1. A shaft coupling comprising:
a tubular coupling main body;
a first slit that, in a position at a predetermined distance in an axial direction from one first end face of the coupling main body, divides the coupling main body over a predetermined angular range in the axial direction;
a shaft-fastening part defined by a portion of the coupling main body from the first end face to the first slit;
a second slit that circumferentially divides the shaft-fastening part;
a fastening shaft hole that is defined by an inner peripheral surface of the shaft-fastening part and that opens in the first end face; and
a pressing mechanism capable of generating widening force and fastening force to deform the shaft-fastening part in directions whereby first and second circumferential end faces of the shaft-fastening part, which oppose each other across the second slit, are caused to move away from and toward each other;
wherein the fastening shaft hole has an internal-diameter dimension such that an interference fit or a transition fit can be formed with a shaft to be fastened when the shaft-fastening part is in a pre-deformed state; and
the fastening shaft hole has an internal-diameter dimension such that a gap is formed with the shaft in a widened state in which the pressing mechanism exerts the widening force having a predetermined value.

2. The shaft coupling according to claim 1,
wherein, when an end part on a side of the shaft-fastening part having the first circumferential end face is designated as a first circumferential end part and another end part on a side of the shaft-fastening part having the second circumferential end face is designated as a second circumferential end part, the pressing mechanism has:
a bolt insertion hole formed in the first circumferential end part;
a bolt screw hole formed in the second circumferential end part; and
a fastening bolt which is disposed being screwed into the bolt screw hole through the bolt insertion hole and which is engaged in the first circumferential end part so as to not move toward or away from the second circumferential end part.

3. The shaft coupling according to claim 2,
wherein the pressing mechanism has a bolt-engaging pin secured to the first circumferential end part;
the fastening bolt has a bolt head part that is engaged with the first circumferential end part from an opposite side from the second circumferential end part; and
the bolt-engaging pin is engaged with the bolt head part from the opposite side from the second circumferential end part.

4. The shaft coupling according to claim 1,
wherein the coupling main body has an adjacent tubular part adjacent to the shaft-fastening part, the adjacent tubular part having a shaft insertion hole coaxially joined to the fastening shaft hole; and
the shaft insertion hole is a hole into which a tip portion of the shaft inserted in the fastening shaft hole is inserted, the shaft insertion hole having an internal-diameter dimension larger than the outside-diameter dimension of the shaft.

5. The shaft coupling according to claim 4,
wherein, when an end part on a side of the shaft-fastening part having the first circumferential end face is designated as a first circumferential end part and another end part on a side of the shaft-fastening part having the second circumferential end face is designated as a second circumferential end part, the pressing mechanism has:
a bolt insertion hole formed in the first circumferential end part;
a bolt screw hole formed in the second circumferential end part;
a fastening bolt disposed being screwed into the bolt screw hole through the bolt insertion hole; and
a bolt-engaging pin secured to the first circumferential end part,
wherein the fastening bolt has a bolt head part that is engaged with the first circumferential end part from an opposite side from the second circumferential end part; and
the bolt-engaging pin is engaged with the bolt head part from the opposite side from the second circumferential end part, and
wherein, in the pre-deformed state, the fastening bolt is in a first position in which it is screwed into the bolt screw hole by a predetermined amount;
in the widened state, the fastening bolt is in a second position in which it is pulled out from the bolt screw hole than the first position; and
in a fastening state in which the fastening force having a predetermined value is applied to the shaft fastening part, the fastening bolt is in a third position in which it is screwed further into the bolt screw hole than the first position.

6. The shaft coupling according to claim 1,
wherein the coupling main body has an adjacent tubular part adjacent to the shaft-fastening part, the adjacent tubular part having a shaft insertion hole coaxially joined to the fastening shaft hole;
the shaft insertion hole has an internal-diameter dimension larger than the outside-diameter dimension of a shaft to be fastened;
the coupling main body has a shaft-linking tubular part having a predetermined length along the axial direction from a second end face on an opposite side from the first end face; and
a second shaft hole that opens in the second end face is defined by a circular inner peripheral surface of the shaft-linking tubular part.

7. The shaft coupling according to claim 6,
wherein, when an end part on a side of the shaft-fastening part having the first circumferential end face is designated as a first circumferential end part and another end part on a side of the shaft-fastening part having the second circumferential end face is designated as a second circumferential end part, the pressing mechanism has:
a bolt insertion hole formed in the first circumferential end part;
a bolt screw hole formed in the second circumferential end part;
a fastening bolt disposed being screwed into the bolt screw hole through the bolt insertion hole; and
a bolt-engaging pin secured to the first circumferential end part,
wherein the fastening bolt has a bolt head part that is engaged with the first circumferential end part from an opposite side from the second circumferential end part; and
the bolt-engaging pin is engaged with the bolt head part from the opposite side from the second circumferential end part, and
wherein, in the pre-deformed state, the fastening bolt is in a first position in which it is screwed into the bolt screw hole by a predetermined amount;
in the widened state, the fastening bolt is in a second position in which it is pulled out from the bolt screw hole than the first position; and
in a fastening state in which the fastening force having a predetermined value is applied to the shaft fastening part, the fastening bolt is in a third position in which it is screwed further into the bolt screw hole than the first position.
